# EUROPEAN PATENT SPECIFICATION

(11) **EP 3 041 389 B1**
(45) Date of publication and mention of the grant of the patent: **26.06.2019**
(21) Application number: 14758996.4
(22) Date of filing: 05.09.2014
(51) Int. Cl.: A47J 27/21

(54) **AN ENERGY SAVING ELECTRIC KETTLE**
ENERGIESPARENDER WASSERKOCHER
BOUILLOIRE ÉPARGNANT DE L'ÉNERGIE

(30) Priority: 06.09.2013 GB 201315960
(43) Date of publication of application: 13.07.2016
(73) Proprietor: D&A Concept Design Limited, Dublin (IE)
(72) Inventor: DOYLE, Anthony, County Dublin (IE); DOHERTY, David, County Dublin (IE)
(74) Representative: O'Connor, Michael Donal
(86) International application number: PCT/EP2014/069010
(87) International publication number: WO 2015/032931

(56) References cited:
- EP-A2- 0 114 687
- WO-A1-01/62129
- CN-B- 101 502 383
- CN-Y- 2 914 939
- DE-U1- 20 317 188
- FR-A- 1 465 984
- US-A- 4 221 672

## Description

### Technical Field:

This invention relates to an energy saving electric kettle.

### Background Art:

A significant amount of electricity is wasted every day through unnecessary operation of electric kettles. The person operating the electric kettle often becomes distracted or engaged in other activities after turning the electric kettle on and they often fail to make their hot beverage immediately after the kettle has boiled for the first time. Due to the fact that most people prefer to make their hot beverages with water that is at or near boiling temperature, they will often turn the kettle on for a second time to re-boil the water in the kettle before making their hot beverage. It is quite common for an electric kettle to be operated several times to boil the water before the water is eventually drawn from the electric kettle to make the hot beverage.

There are several problems with the manner in which many kettles are currently operated. For example, continuous re-boiling of the kettle leads to a substantial waste of electricity, an increase in kettle operating costs, decreased kettle longevity and is detrimental to the environment. Furthermore, it is known that boiling the kettle has the direct effect of de-oxygenating the water in the kettle and this de-oxygenation of the water is thought by many to have an adverse effect on the organoleptic properties of several types of hot beverage. Therefore, repetitive re-boiling of the water is undesirable. DE20317188 describes an electric kettle that goes some way to address these problems by having an aerogel insulation layer.

It is an object of the present invention to provide an energy saving electric kettle that overcomes at least some of the problems with the known kettles and more specifically it is an object of the present invention to provide a kettle that is efficient in operation as well as cost effective to run. It is a further object of the invention to provide an energy saving electric kettle that offers a useful choice to the consumer.

### Summary of Invention

According to the invention there is provided an energy saving electric kettle comprising a liquid container having a charging inlet, a discharge outlet, a heating element for heating the contents of the container, the container further comprising an inner wall, an outer wall and an insulation layer therebetween, and in which the insulation layer comprises a silica aerogel material, and in which the silica aerogel is mat silica aerogel..

By having such an energy saving electric kettle, once boiled, the water in the kettle will remain hot for a substantial period of time, far greater than would otherwise be the case with the known kettles. Therefore, the person who boiled the kettle in the first instance will have the peace of mind that their hot beverage will be made with water that is close to the boiling temperature of water even if they make their beverage several minutes after the kettle has boiled. This will lead to a reduction in the number of times that the kettle is re-boiled thereby leading to a reduction in the amount of electricity used, a reduction in the operating cost of the kettle, an increase in the longevity of the kettle and less detrimental impact on the environment. Furthermore, as a consequence of having less "re-boils", the water in the kettle used to make a hot beverage will be richer in oxygen thereby leading to a tastier beverage.

Other twin-walled kettles are known. Generally speaking, these known twin-walled kettles incorporate an inner wall and an outer wall with a vacuum chamber therebetween. However, these known twin-walled kettles have been known to explode if subjected to a sudden impact. By filling the space between the inner and outer walls of the twin-walled kettles with aerogel, the possibility of explosion upon impact is obviated and the insulating performance compares favourably with other twin-walled kettles. In spite of the difficulties in handling the aerogel, aerogel has unexpectedly been found to be the ideal substance to use as the insulating material in an electric kettle. The aerogel can be shaped appropriately so that it can be incorporated into a simple manufacturing process and, once constructed, the kettle container will encase the aerogel between an inner and an outer wall where it cannot cause irritation to the handler of the kettle. By using aerogel as the insulation material, the construction of the kettle will be simple and inexpensive to manufacture.

In one embodiment of the invention there is provided an energy saving electric kettle in which there is provided a lid for the container, the lid being moveable to and from a position covering the charging aperture and a position substantially free of the charging aperture, the lid comprising an inner lid wall, an outer lid wall and an insulation layer of aerogel therebetween. By providing a separate lid with the layer of insulation material, it will be possible to provide a closure on the charging aperture that improves the insulation properties of the kettle. This is seen as important. It has been found that by insulating the lid of the electric kettle in such a manner, the performance of the kettle is greatly enhanced leading to significantly lower energy consumption.

According to the invention there is provided an energy saving electric kettle in which the aerogel material comprises silica aerogel. Silica aerogel is seen as particularly useful due to the fact that it is flexible and withstands high temperatures. Preferably, the aerogel is coated with a high temperature silicon spray to keep the dust levels down.

According to the invention there is provided an energy saving electric kettle in which the aerogel material is glass fibre aerogel, preferably glass fibre continuous filament aerogel. By using a glass fibre continuous filament aerogel, the aerogel will be more pliable and easier to manipulate in the manufacturing process. According to the invention the silica aerogel is a mat silica aerogel. In another embodiment, not part of the invention, silica aerogel is a fabric silica aerogel.

In one embodiment of the invention, the aerogel is covered in an aluminium foil. By having an aluminium foil, the aerogel material can be used in the manufacture of the electric kettle with greater ease and with less possibility of causing irritation to handlers of the aerogel. Furthermore, the use of an aluminium foil will allow the outer wall of the electric kettle to be constructed from a plastics material if desired.

In one embodiment of the invention, the aerogel is encased in a glass fibre pouch of material. The glass fibre material will allow the kettle to withstand temperatures of the order of 260°C (500°F).

In one embodiment of the invention there is provided an energy saving electric kettle in which there is provided a closure for the discharge outlet selectively operable to substantially seal the container or in the alternative to allow dispensing of liquid from the container. The closure will ensure that heat does not easily escape out through the discharge outlet. This is a main source of heat loss and the closure will help keep the liquids hot for a significantly longer period of time than would otherwise be the case.

In one embodiment of the invention there is provided an energy saving electric kettle in which the closure comprises a valve. A valve is seen as a very useful device to use as the closure for the kettle. The valve may obviate the need for the person operating the kettle to positively open or close the closure each time that they pour liquid from the kettle. Furthermore, a valve, other than a one-way or non-return valve, may allow filling of the kettle directly through the discharge outlet without requiring removal of a lid in those instances when a lid is provided.

In one embodiment of the invention there is provided an energy saving electric kettle in which the closure comprises a non-return valve.

In one embodiment of the invention there is provided an energy saving kettle in which there is provided a rechargeable battery formed integrally with the liquid container and a rechargeable battery charging circuit. By having a rechargeable battery formed integrally with the liquid container, it is possible to boil the kettle through the use of the battery power rather than a direct connection to a mains-electricity supply. This allows for the electrical kettle to be portable and taken to locations where there may not be direct access to mains-electricity supply. It is envisaged that the battery will be sufficient to allow the kettle to be boiled at least 2 or 3 times using battery power alone. By having a rechargeable battery formed integrally with the kettle, it will also be possible to avail of cheaper electricity tariffs at night time to charge the battery and use that stored electricity to boil the kettle during the day time when electricity tariffs are more expensive.

In one embodiment of the invention, the heating element comprises an infra-red heating element. In another embodiment, the heating element comprises an infra-red element and the inner wall and the outer wall are constructed from stainless steel.

In one embodiment of the present invention, the insulation layer is of the order of 1.5cm (0.015 metres) thick. Alternatively, the insulation layer may be of the order of 1.0cm thick (0.01 metres) thick.

### Brief Description of the Drawings

The invention will now be more clearly understood from the following description of some embodiments thereof given by way of example only with reference to the accompanying drawings, in which:-
Figure 1 is a side view of an energy saving kettle according to the invention;
Figure 2 is a side, cross sectional view of the energy saving kettle of Figure 1;
Figure 3 is a side view of an alternative embodiment of energy saving kettle according to the invention; and
Figure 4 is a side, cross sectional view of another alternative embodiment of energy saving kettle according to the invention.

### Detailed Description of the Drawings:

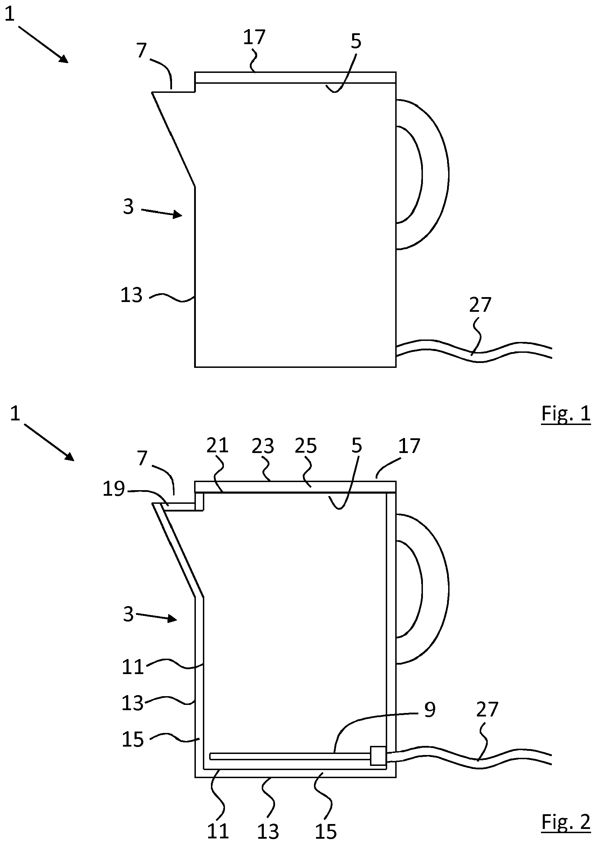

Referring to Figures 1 and 2, there is shown an energy saving electric kettle, indicated generally by the reference numeral 1, comprising a liquid container 3 having a charging inlet 5, a discharge outlet 7, and a heating element 9 for heating the contents (not shown) of the container. The container 3 further comprises an inner wall 11, an outer wall 13 and an insulation layer 15 therebetween. The insulation layer 15 comprises an aerogel material. Preferably, the aerogel is silica aerogel and/or a glass fibre continuous filament aerogel.

The energy saving kettle further comprises a lid 17 for the container 3 and a closure 19 for the discharge outlet 7. The lid 17 is moveable to and from a position covering the charging inlet 5 (as illustrated in the drawings) and a position substantially free of the charging inlet. The lid 17 may be either removably mounted or indeed may be hingedly mounted on the container to allow the lid to be moved to and from a position covering the charging inlet and a position substantially free of the charging inlet. The lid 17 comprises an inner lid wall 21, an outer layer lid wall 23 and an insulation layer 25 of aerogel material therebetween. The closure 19 is selectively operable to substantially seal the container 3 or in the alternative to allow dispensing of liquid from the discharge outlet 7 of the container. In the embodiment shown, the closure 19 is a valve. Ideally, the closure valve is a non-return valve. The closure will be operable to prevent egress of steam, and by extension, heat, from the container 3. The closure will in one instance be a pressure sensitive valve that will avoid excessive build-up of pressure within the kettle. In other words, once the pressure inside the kettle reaches a certain magnitude, the valve will allow some escape of steam to prevent excessive pressure build-up. It is envisaged that other mechanisms could be provided to achieve the same effect.

In the embodiment shown, the electrical circuitry including a heating element 9 and an electric cable 27 are constructed as part of the energy saving electric kettle. Alternatively, the kettle may be provided with a separate base in which at least part of the electrical circuitry will be housed and to which the electric cable will be connected to. The heating element 9 is illustrated as a metal coil however this heating element is not so limited and may be provided by way of a number of alternative heating elements.

Various comparative tests were performed on a standard electric kettle and an energy saving electric kettle with 1.5 cm of glass fibre silica aerogel insulation surrounding the kettle. Surprisingly, it was found that the time to boil was practically the same for the standard electric kettle and the energy saving kettle according to the invention. This is counterintuitive as one would expect that the better heat containment of the insulated kettle would result in a faster time to boil initially. However, it was found that a significant improvement in energy saving was achieved on subsequent re-boils of the water. On average, accounting for different volumes of water in the kettle and different lapsed times between re-boils, an energy saving of the order of 20% was achieved using the energy saving electric kettle according to the invention.

A plurality of tests were carried out in order to simulate real life situations. Kettles with 0.5 litres, 1.0 litres and 1.5 litres were tested. The water in the kettle, after initial boiling was allowed to cool for 2 hours, 1 hour and 30 minutes in various different tests before the re-boil operation was performed. In one set of tests, after initial boiling, 0.25 litres of water was removed from the kettle before the next boiling operation. Each time the kettle was re-boiled, 0.25 litres of water was removed until the kettle was empty. Each time, the amount of energy required to re-boil the kettle was measured. In another set of tests, after initial boiling, 0.25 litres of water was removed from the kettle however the water taken from the kettle was replaced with ambient temperature water before the next boiling operation and it was determined how much energy was required to re-boil the kettle with the replenished water. In other words, the tests took into account those real-life scenarios where the water taken from the kettle is replaced with new water each time and those scenarios where the water is not replaced. The tests also took into account those scenarios where more or less water is boiled.

The results achieved indicated a minimum saving of approximately 15% of the energy used to re-boil the water to a maximum saving of approximately 40% of the energy used to re-boil the water. Again, on average, an energy saving of the order of 20% was achieved using the energy saving electric kettle according to the invention compared with the standard kettle since the total energy saving is offset by the initial boil energy being practically identical. In the experiments shown, an aerogel layer of 1.5cm (0.015 metres) was used however it is envisaged that an aerogel layer of 1.0cm (0.01 metres) would suffice and achieve the same or similar benefits.

There are other advantages to providing the energy saving kettle according to the present invention. First of all, the water in the energy saving electric kettle will remain hotter for longer allowing users to use the water for longer before having to re-boil the water. Secondly, the re-boil time of the energy saving electric kettle is significantly reduced. Thirdly, another advantage of the energy saving kettle according to the invention is that the exterior of the kettle will be significantly cooler thereby decreasing the possibility of a user burning their hands when handling the outside of the kettle.

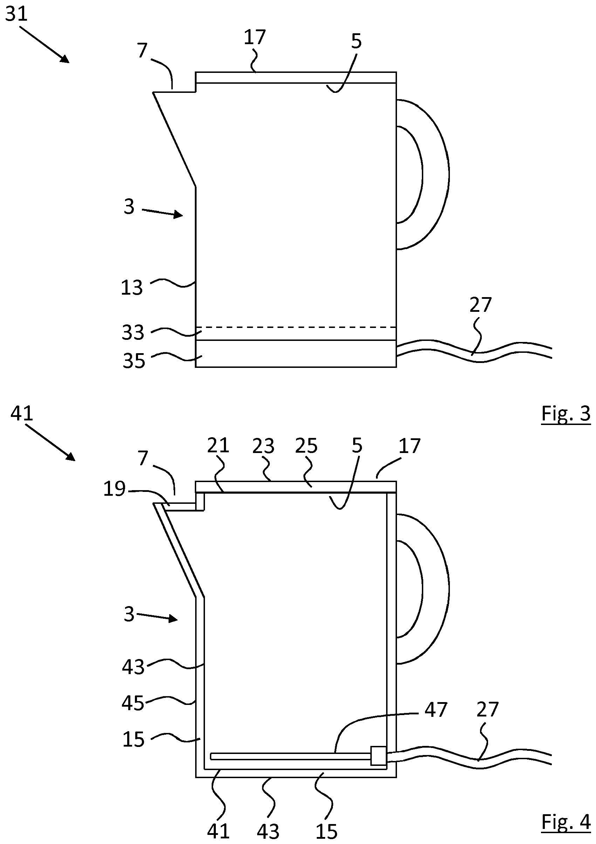

Referring to Figure 3, there is shown an alternative embodiment of electric kettle according to the invention, indicated generally by the reference numeral 31, where like parts have been given the same reference numeral as before. The electric kettle 31 differs from the embodiment shown in Figures 1 and 2 in that there is further provided a rechargeable battery 33 formed integrally with the liquid container and a rechargeable battery charging circuit 35. It is envisaged that the rechargeable battery 33 may comprise conventional rechargeable battery technology or may comprise a plastic battery, for example a plastic battery constructed using block co-polymers. Ideally, the rechargeable battery will be lightweight and able to hold a charge of up to in the region of 1 kilowatt.

The rechargeable battery charging circuit 35 may also be formed integrally with the rest of the electric kettle or it may be formed as part of a separate base on which the remainder of the electric kettle may be docked. The rechargeable battery charging circuit 35 operates in such a manner that when it is plugged into the mains, the mains power can be used to either charge the rechargeable battery 33 or to boil the water in the electric kettle 31 using mains electricity supply. If the rechargeable battery charging circuit 35 is formed integrally with the rest of the electric kettle, this will allow the electric kettle's rechargeable battery 33 to be recharged once there is access to a mains electricity supply.

Referring to Figure 4, there is shown a third embodiment of electric kettle, indicated generally by the reference numeral 41, where like parts have been given the same reference numeral as before. The electric kettle 41 is similar to the electric kettle 1 shown in figures 1 and 2 however the inner wall 43 and the outer wall 45 are in this instance constructed from a stainless steel material and the heating element 47 comprises an infrared heating element rather than a metal coil. The insulation layer is the same as illustrated before.

In the embodiments shown, the aerogel material is used as the insulation layer. Preferably, this aerogel material will be coated in aluminium foil and or glass fibre. By coating the aerogel in glass fibre, the insulation material will be suitable for use at temperatures in the region of up to 260°C and by coating the aerogel in aluminium foil, the insulation material will be easier to handle during manufacture. Furthermore, the use of an aerogel coated with aluminium and glass fibre will allow for a plastic material to be used for the outer wall of the liquid container.

Throughout this specification, reference is sometimes made to "boiling the kettle" or "re-boiling the kettle". It will be understood that this is simply adhering to the accepted conventions and vernacular used when discussing boiling water in a kettle. It will be understood that a reference to either "boiling the kettle" or "re-boiling the kettle" will be understood to mean "boiling the water in the kettle" or "re-boiling the water in the kettle" respectively as it is the water in the kettle and the not the kettle itself that is boiled, as would be clearly understood.

In this specification the terms "comprise, comprises, comprised and comprising" and the terms "include, includes, included and including" are all deemed totally interchangeable and should be afforded the widest possible interpretation.

The invention is in no way limited to the embodiment hereinbefore described but may be varied in both construction and detail within the scope of the appended claims.

## Claims

1. An energy saving electric kettle (1) comprising a liquid container (3) having a charging inlet (5), a discharge outlet (7), a heating element (9) for heating the contents of the container, the container further comprising an inner wall (11), an outer wall (13) and an insulation layer (15) therebetween, and in which the insulation layer (15) comprises a silica aerogel material, **characterized in that** the silica aerogel is mat silica aerogel.

2. An energy saving electric kettle (1) as claimed in claim 1 in which there is provided a lid (17) for the container (3), the lid being moveable to and from a position covering the charging inlet (5) and a position substantially free of the charging inlet, the lid comprising an inner lid wall (21), an outer lid wall (23) and an insulation layer (25) of aerogel material therebetween.

3. An energy saving electric kettle (1) as claimed in any preceding claim in which the aerogel material is glass fibre silica aerogel,

4. An energy saving electric kettle (1) as claimed in claim 3 in which the aerogel material is glass fibre continuous filament silica aerogel.

5. An energy saving kettle (1) as claimed in any preceding claim in which there is provided a layer of aluminium foil surrounding the aerogel material.

6. An energy saving kettle (1) as claimed in any preceding claim in which the aerogel material is encased in glass fibre.

7. An energy saving electric kettle (1) as claimed in any preceding claim in which there is provided a closure (19) for the discharge outlet selectively operable to substantially seal the container or in the alternative to allow dispensing of liquid from the container.

8. An energy saving electric kettle (1) as claimed in claim 7 in which the closure comprises a valve.

9. An energy saving electric kettle (1) as claimed in claim 8 in which the closure comprises a non-return valve.

10. An energy saving kettle (1) as claimed in any preceding claim in which the inner wall (43) is constructed from stainless steel.

11. An energy saving kettle (1) as claimed in any preceding claim in which the heating element (47) is an infrared element.

12. An energy saving kettle (1) as claimed in any preceding claim in which the outer wall (45) is constructed from stainless steel.

13. An energy saving kettle (1) as claimed in claims 1 to 11 in which the outer wall (45) is constructed from a plastic material.

14. An energy saving kettle (1) as claimed in any preceding claim in which there is provided a rechargeable battery (33) formed integrally with the electric kettle and a rechargeable battery charging circuit (35).

15. An energy saving kettle (1) as claimed in any preceding claim in which the insulation layer (15) has a thickness greater than or equal to 0.01 metres.

## Patentansprüche

1. Energiesparender elektrischer Wasserkocher (1), umfassend einen Flüssigkeitsbehälter (3) mit einem Fülleinlass (5), einen Ausgießauslass (7), einem Heizelement (9) zum Erhitzen des Inhalts des Behälters, wobei der Behälter weiter eine Innenwand (11), eine Außenwand (13) und eine Wärmedämmschicht (15) dazwischen umfasst und wobei die Wärmedämmschicht (15) ein Kieselsäure-Aerogelmaterial umfasst, **dadurch gekennzeichnet, dass** es sich bei dem Kieselsäure-Aerogel um Kieselsäure-Aerogel in Mattenform handelt.

2. Energiesparender elektrischer Wasserkocher (1) nach Anspruch 1, wobei ein Deckel (17) für den Behälter (3) vorgesehen ist, wobei der Deckel in eine und aus einer Stellung, in der er den Fülleinlass (5) verdeckt, und einer Stellung, in der er im Wesentlichen von dem Fülleinlass getrennt ist, bewegbar ist, wobei der Deckel eine Deckelinnenwand (21), eine Deckelaußenwand (23) und eine Wärmedämmschicht (25) aus Aerogelmaterial dazwischen umfasst.

3. Energiesparender elektrischer Wasserkocher (1) nach einem der vorangehenden Ansprüche, wobei es sich bei dem Aerogelmaterial um Glasfaser-Kieselsäure-Aerogel handelt.

4. Energiesparender elektrischer Wasserkocher (1) nach Anspruch 3, wobei es sich bei dem Aerogelmaterial um Endlosfaden-Glasfaser-Kieselsäure-Aerogel handelt.

5. Energiesparender Wasserkocher (1) nach einem der vorangehenden Ansprüche, wobei eine das Aerogelmaterial umgebende Schicht aus Aluminiumfolie vorgesehen ist.

6. Energiesparender Wasserkocher (1) nach einem der vorangehenden Ansprüche, wobei das Aerogelmaterial von Glasfasern umhüllt ist.

7. Energiesparender elektrischer Wasserkocher (1) nach einem der vorangehenden Ansprüche, wobei ein Verschluss (19) für den Ausgießauslass vorgesehen ist, der selektiv betätigbar ist, um den Behälter im Wesentlichen zu verschließen oder alternativ das Ausgeben von Flüssigkeit aus dem Behälter zu ermöglichen.

8. Energiesparender elektrischer Wasserkocher (1) nach Anspruch 7, wobei der Verschluss ein Ventil umfasst.

9. Energiesparender elektrischer Wasserkocher (1) nach Anspruch 8, wobei der Verschluss ein Rückschlagventil umfasst.

10. Energiesparender Wasserkocher (1) nach einem der vorangehenden Ansprüche, wobei die Innenwand (43) aus Edelstahl hergestellt ist.

11. Energiesparender Wasserkocher (1) nach einem der vorangehenden Ansprüche, wobei es sich bei dem Heizelement (47) um ein Infrarotelement handelt.

12. Energiesparender Wasserkocher (1) nach einem der vorangehenden Ansprüche, wobei die Außenwand (45) aus Edelstahl hergestellt ist.

13. Energiesparender Wasserkocher (1) nach Ansprüchel 1-11, wobei die Außenwand (45) aus einem Kunststoff hergestellt ist.

14. Energiesparender Wasserkocher (1) nach einem der vorangehenden Ansprüche, wobei eine in dem elektrischen Wasserkocher integriert gebildete wiederaufladbare Batterie (33) und ein Ladestromkreis (35) für die wiederaufladbare Batterie vorgesehen sind.

15. Energiesparender Wasserkocher (1) nach einem der vorangehenden Ansprüche, wobei die Wärmedämmschicht (15) eine Dicke von mehr als oder gleich 0,01 Metern aufweist.

## Revendications

1. Bouilloire électrique à économie d'énergie (1) comprenant un réceptacle à liquide (3) présentant une entrée de remplissage (5), une sortie de vidange (7), un élément chauffant (9) destiné à chauffer le contenu du réceptacle, le réceptacle comprenant en outre une paroi intérieure (11), une paroi extérieure (13) et une couche d'isolation (15) entre celles-ci, et dans laquelle la couche d'isolation (15) comprend un matériau sous forme d'aérogel de silice, **caractérisée en ce que** l'aérogel de silice est un tapis d'aérogel de silice.

2. Bouilloire électrique à économie d'énergie (1) selon la revendication 1 dans laquelle un couvercle (17) pour le réceptacle (3) est fourni, le couvercle étant mobile vers et depuis une position recouvrant l'entrée de remplissage (5) et une position sensiblement exempte de l'entrée de remplissage, le couvercle comprenant une paroi de couvercle intérieure (21), une paroi de couvercle extérieure (23) et une couche d'isolation (25) de matériau sous forme d'aérogel entre celles-ci.

3. Bouilloire électrique à économie d'énergie (1) selon l'une quelconque des revendications précédentes dans laquelle le matériau sous forme d'aérogel est un aérogel de silice renforcé par des fibres de verre.

4. Bouilloire électrique à économie d'énergie (1) selon la revendication 3 dans laquelle le matériau sous forme d'aérogel est un aérogel de silice renforcé par des fibres de verre à filament continu.

5. Bouilloire à économie d'énergie (1) selon l'une quelconque des revendications précédentes dans laquelle une couche de feuille d'aluminium entourant le matériau sous forme d'aérogel est fournie.

6. Bouilloire à économie d'énergie (1) selon l'une quelconque des revendications précédentes dans laquelle le matériau sous forme d'aérogel est enfermé dans des fibres de verre.

7. Bouilloire électrique à économie d'énergie (1) selon l'une quelconque des revendications précédentes dans laquelle une fermeture (19) est fournie pour la sortie de vidange permettant sélectivement de sceller sensiblement le réceptacle ou en variante de permettre la distribution de liquide à partir du réceptacle.

8. Bouilloire électrique à économie d'énergie (1) selon la revendication 7 dans laquelle la fermeture comprend une soupape.

9. Bouilloire électrique à économie d'énergie (1) selon la revendication 8 dans laquelle la fermeture comprend une soupape de non-retour.

10. Bouilloire à économie d'énergie (1) selon l'une quelconque des revendications précédentes dans laquelle la paroi intérieure (43) est composée d'acier inoxydable.

11. Bouilloire à économie d'énergie (1) selon l'une quelconque des revendications précédentes dans laquelle l'élément chauffant (47) est un élément infrarouge.

12. Bouilloire à économie d'énergie (1) selon l'une quelconque des revendications précédentes dans laquelle la paroi extérieure (45) est composée d'acier inoxydable.

13. Bouilloire à économie d'énergie (1) selon les revendications 1 à 11 dans laquelle la paroi extérieure (45) est composée d'une matière plastique.

14. Bouilloire à économie d'énergie (1) selon l'une quelconque des revendications précédentes dans laquelle une batterie rechargeable (33) est fournie, formée d'un seul tenant avec la bouilloire électrique et un circuit de charge de batterie rechargeable (35).

15. Bouilloire à économie d'énergie (1) selon l'une quelconque des revendications précédentes dans laquelle la couche d'isolation (15) présente une épaisseur supérieure ou égale à 0,01 mètre.
